# EUROPÄISCHE PATENTSCHRIFT

(11) **EP 0 900 929 B1**
(45) Veröffentlichungstag und Bekanntmachung des Hinweises auf die Patenterteilung: **04.12.2002**
(21) Anmeldenummer: 98116759.6
(22) Anmeldetag: 04.09.1998
(51) Int. Cl.: F02F 11/00

(54) **Träger einer Flachdichtung**
Support of a gasket
Support de joint d'étanchéité

(30) Priorität: 08.09.1997 DE 19739196
(43) Veröffentlichungstag der Anmeldung: 10.03.1999
(73) Patentinhaber: Carl Freudenberg KG, 69469 Weinheim (DE)
(72) Erfinder: Gourot, Bernard, 52200 Langres (FR)

(56) Entgegenhaltungen:
- EP-A- 0 665 371
- FR-A- 2 659 122
- GB-A- 2 165 898
- US-A- 1 986 465
- US-A- 3 175 832
- US-A- 4 572 522

## Beschreibung

### Technisches Gebiet

Die Erfindung betrifft einen Träger einer Flachdichtung, der aus zähhartem Werkstoff besteht und mit elastomerem Dichtungswerkstoff umspritzbar ist, umfassend zumindest zwei Segmente, die im Bereich ihrer einander zugewandten Enden miteinander verbunden sind.

### Stand der Technik

Ein derartiger Träger ist aus der DE 43 12 629 C1 bekannt. Der Träger ist als in Elastomermaterial eingeformte Blecheinlage ausgebildet und weist mehrere separat erzeugte Segmente auf, wobei die Segmente allein von dem elastomeren Dichtungswerkstoff zusammengehalten sind. Durch eine derartige Ausgestaltung des Trägers ist der Materialverlust bei seiner Herstellung sehr gering.

### Darstellung der Erfindung

Der Erfindung liegt die Aufgabe zugrunde, einen Träger der eingangs genannten Art derart weiterzuentwickeln, daß dessen Handhabung bei der Herstellung der Flachdichtung vereinfacht wird und daß auch große Träger ohne Verzug ausstanzbar sind.

Diese Aufgabe wird mit den Merkmalen von Anspruch 1 gelöst. Auf vorteilhafte Ausgestaltungen nehmen die Unteransprüche Bezug.

Zur Lösung der Aufgabe ist es im Rahmen der vorliegenden Erfindung vorgesehen, daß die Enden formschlüssig aneinander festgelegt sind. Hierbei ist von Vorteil, daß sich der Träger, bestehend aus den einzelnen Segmenten, in seinen Gebrauchseigenschaften von einem einstückig hergestellten Träger nicht unterscheidet Da die Segmente im Anschluß an ihre Zusammenfügung ortsfest zueinander positioniert sind, ist die Herstellung der Flachdichtung besonders einfach, da der aus den Segmenten bestehende Träger als vormontierte Einheit in das Werkzeug einlegbar und mit elastomerem Dichtungswerkstoff umspritzbar ist. Ein Verschieben der einzelnen Segmente relativ zueinander ist während der Herstellung der Flachdichtung nicht möglich, so daß die Herstellung der Flachdichtung einfach und kostengünstig durchführbar ist.

Im Vergleich zu Trägern, die einstückig ausgebildet und als Ganzes ausgestanzt sind, ist bei dem erfindungsgemäßen Träger von Vorteil, daß der herstellungsbedingte Verzug des Trägers auf ein Minimum begrenzt ist.

Das Problem einstückig ausgebildeter Träger ist, daß sich das Bauteil wegen sein Größe durch den Stanzvorgang bogenförmig verzieht. Dieser Verzug hat zur Folge, daß ein einwandfreies Einlegen des Trägers in das Spritzgießwerkzeug erheblich erschwert wird. Eine Vielzahl der einstückig ausgestanzten Rahmen ist daher nicht mehr zu verarbeiten oder muß zeitaufwendig nachgerichtet werden.

Durch das Ausstanzen von Segmenten, wobei mehrere Segmente in einem Arbeitsgang ausgestanzt werden können, und der anschließenden Zusammensetzung zum ganzen Träger, wird der zuvor beschriebene Verzug nahezu vollständig vermieden.

Der Materialverbrauch bei der Herstellung von Trägem aus Segmenten ist deutlich reduziert, da großflächige, ausgestanzte Innenteile, die anschließend verschrottet werden, wie bei der Herstellung einstückiger Träger, nicht mehr vorkommen.

Bei dem zähharten Werkstoff zur Herstellung der Segmente handelt es sich bevorzugt um metallische Werkstoffe, beispielsweise Blech. Der Träger ist daher kostengünstig herstellbar.

Die Enden sind in Umfangsrichtung zugfest ineinander eingehakt. Die Montage wird durch eine derartige Ausgestaltung sehr vereinfacht. Ein Lösen der Segmente ist auch während der Umspritzung des Trägers mit elastomerem Dichtungswerkstoff zuverlässig ausgeschlossen. Außerdem ist die Gefahr von Montagefehlern bei der Komplettierung der Segmente zum Träger auf ein Minimum begrenzt. Die unter Verwendung des erfindungsgemäßen Trägers hergestellten Flachdichtungen sind besonders maßhaltig.

Bevorzugt ist jedes der Enden, bezogen auf eine gedachte, sich in Umfangsrichtung erstreckende, senkrecht auf dem Träger stehende Ebene spiegelbildlich ausgebildet. Dazu kann es vorgesehen sein, daß eines der einander benachbarten Enden mit einem in Umfangsrichtung vorstehenden Vorsprung versehen ist, der im vorspringenden Bereich in seinem Querschnitt erweitert ist und daß das angrenzende andere Ende eine in Umfangsrichtung zurückspringende, kongruent gestaltete, im Bereich ihrer Mündung eine Querschnittsverengung aufweisende Ausnehmung hat, in die der Vorsprung einrastbar ist. Der Vorsprung kann beispielsweise im wesentlichen schwalbenschwanzförmig ausgebildet sein. Derartige, symmetrisch zu der Ebene ausgebildete Vorsprünge und Ausnehmungen sind durch Stanzen besonders einfach und exakt herstellbar. Die Montage der Segmente miteinander erfolgt derart, daß deren Enden überlappend zueinander positioniert werden und der Vorsprung und die Ausnehmung anschließend ineinander eingeschnappt werden. Durch die zur Umfangsrichtung symmetrische Ausgestaltung der Enden zentrieren diese sich während der Montage von selbst. Die Positionierung der Segmente zueinander, sowohl in als auch quer zur Längsrichtung ist daher besonders gut.

Zusätzlich kann es vorgesehen sein, daß der Vorsprung des einen Endes und der Werkstoff des die Ausnehmung begrenzenden anderen Endes zumindest einerseits des Trägers zumindest eine ineinanderübergehende Kerbe aufweisen. Durch die plastische Verformung sowohl des Werkstoffs des Vorsprungs als auch des Werkstoffs, der die Ausnehmung begrenzt, wird ein Widerhakeneffekt erzielt, so daß die Enden der Segmente unlösbar miteinander verbunden sind.

Der erfindungsgemäße Träger findet bevorzugt in einer Flachdichtung Anwendung, die z.B. als Ölwannendichtung ausgebildet sein kann.

### Kurzbeschreibung der Zeichnung

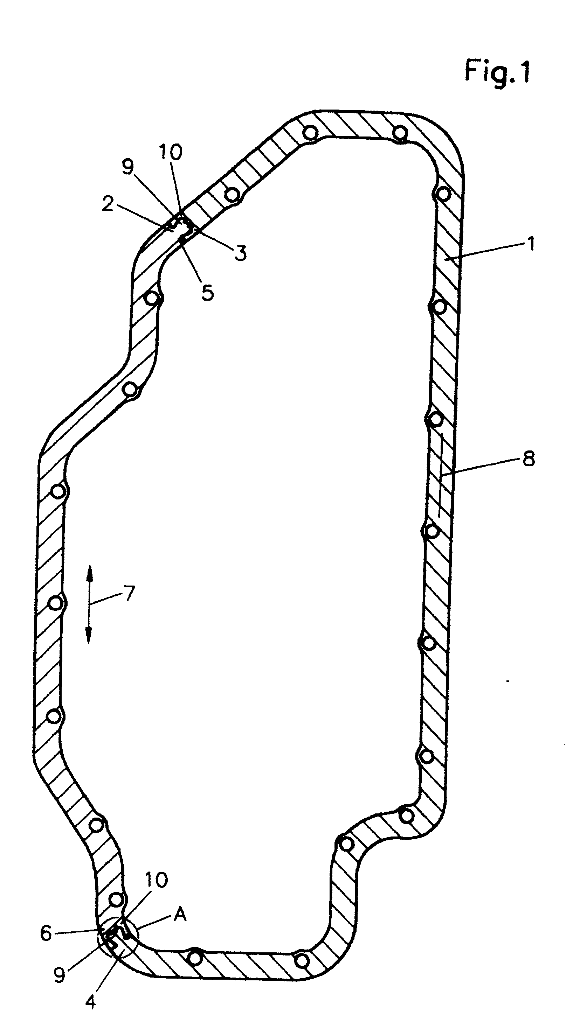

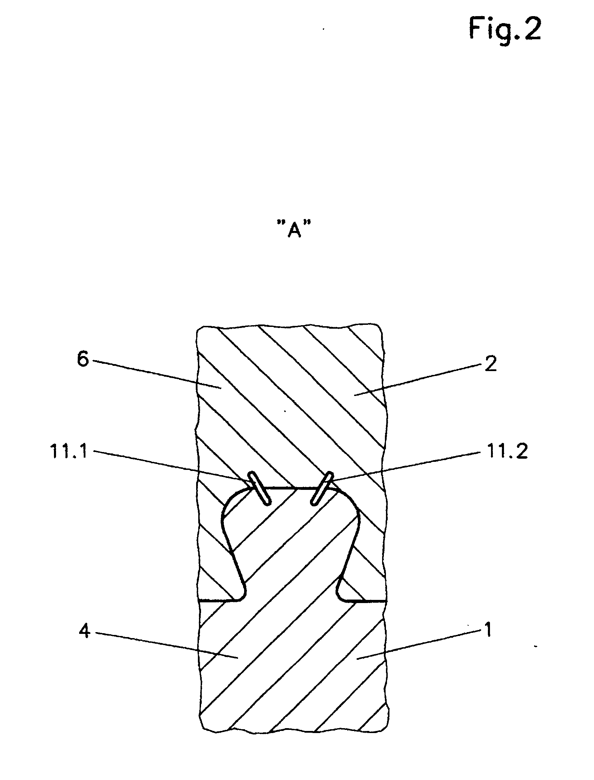

Ein Ausführungsbeispiel des erfindungsgemäßen Träger ist in den Fig. 1 und 2 gezeigt und wird nachfolgend näher beschrieben.

Es zeigen:
Fig. 1 eine Draufsicht auf ein Ausführungsbeispiel eines Trägers einer Ölwannendichtung,
Fig. 2 den Ausschnitt "A" aus Fig. 1 in vergrößerter Darstellung.

### Ausführung der Erfindung

In den Fig. 1 und 2 ist ein Ausführungsbeispiel eines Trägers einer Flachdichtung gezeigt, der aus einem metallischen Werkstoff besteht. Die separat erzeugten Segmente 1, 2 sind im Bereich ihrer einander zugewandten Enden 3, 5; 4, 6 formschlüssig miteinander verbunden.

Der Formschluß wird durch Vorsprünge 9 erzeugt, die im wesentlichen schwalbenschwanzförmig ausgebildet und in die benachbarten Ausnehmungen 10 eingefügt sind. Die Vorsprünge 9 sind in Umfangsrichtung 7 in ihrem Querschnitt erweitert. Die Ausnehmungen 10 sind kongruent zu den Vorsprüngen 9 gestaltet und weisen im Bereich ihrer Mündungen eine Querschnittsverengung auf. Sowohl die Vorsprünge 9 als auch die Ausnehmungen 10 sind, bezogen auf eine gedachte Ebene 8, die senkrecht auf dem Träger steht und sich in Längsrichtung 7 erstreckt, jeweils spiegelbildlich ausgebildet.

Durch die Zusammensetzung des Trägers aus mehreren Segmenten 1, 2 ist dieser besonders formstabil und weist nur einen vemachlässigbar geringen, herstellungsbedingten Verzug auf. Durch die vormontierbare Einheit, die durch die beiden Segmente 1, 2 gebildet ist, ist der Träger zur Herstellung der Flachdichtung gut handhabbar. Die gebrauchsfertige Flachdichtung ist ebenfalls sehr maßhaltig und gut montierbar, dadurch, daß der Träger durch die in Umfangsrichtung 7 zugfest ineinander eingehakten Segmente 1, 2 die formschlüssig aneinander festgelegt sind, endlos ausgebildet ist.

In Fig. 2 ist der Ausschnitt "A" aus Fig. 1 vergrößert dargestellt. Die Segmente 1, 2 sind mit ihren Enden 4, 6 aneinander festgelegt. Durch das Einschlagen der in diesem Ausführungsbeispiel zwei Kerben 11.1, 11.2, sind die Segmente 1, 2 unlösbar miteinander verbunden.

Die Kerben 11 werden eingeschlagen, wenn die Segmente bereits formschlüssig miteinander verbunden sind.

## Patentansprüche

1. Träger einer Flachdichtung, der aus zähhartem Werkstoff besteht und mit elastomerem Dichtungswerkstoff umspritzbar ist, umfassend zumindest zwei Segmente (1, 2), die im Bereich ihrer einander zugewandten Enden (3, 5; 4,6) miteinander verbunden sind, **dadurch gekennzeichnet, daß** die Enden (3, 5; 4, 6) formschlüssig aneinander festgelegt sind.

2. Träger nach Anspruch 1, **dadurch gekennzeichnet, daß** die Enden (3, 5; 4, 6) in Umfangsrichtung (7) zugfest ineinander eingehakt sind.

3. Träger nach einem der Ansprüche 1 bis 2, **dadurch gekennzeichnet, daß** jedes Ende (3,4; 5,6) bezogen auf eine gedachte, sich in Umfangsrichtung (7) erstreckende, senkrecht auf dem Träger stehende Ebene (8) spiegelbildlich ausgebildet ist.

4. Träger nach einem der Ansprüche 1 bis 3, **dadurch gekennzeichnet, daß** eines der einander benachbarten Enden (3, 5; 4, 6) mit einem in Umfangsrichtung (7) vorstehenden Vorsprung (9) versehen ist, der im vorspringenden Bereich in seinem Querschnitt erweitert ist und daß das angrenzende andere Ende (5, 3; 6, 4) eine in Umfangsrichtung (7) zurückspringende, kongruent gestaltete, im Bereich ihrer Mündung eine Querschnittsverengung aufweisende Ausnehmung (10) hat, in die der Vorsprung (9) einrastbar ist.

5. Träger nach Anspruch 4, **dadurch gekennzeichnet, daß** der Vorsprung (9) im wesentlichen schwalbenschwanzförmig ausgebildet ist.

6. Träger nach einem der Ansprüche 4 bis 5, **dadurch gekennzeichnet, daß** der Vorsprung (9) des einen Endes (3, 5; 4, 6) und der Werkstoff des die Ausnehmung (10) begrenzenden anderen Endes (5, 3; 6, 4) zumindest einerseits des Trägers zumindest eine ineinanderübergehende Kerbe (11) aufweisen.

## Claims

1. A support of a gasket which consists of tough material and can be encapsulated in elastomeric sealing material, comprising at least two segments (1, 2), which are connected to each other in the region of their mutually facing ends (3, 5; 4, 6), **characterized in that** the ends (3, 5; 4, 6) are fixed against each other with positive engagement.

2. A support according to claim 1, **characterized in that** the ends (3, 5; 4, 6) are hooked in each other to resist tension in the circumferential direction (7).

3. A support according to either of claims 1 and 2, **characterized in that** each end (3, 4; 5, 6) is formed mirror-invertedly with respect to an imaginary plane (8) extending in the circumferential direction (7) and perpendicular to the support.

4. A support according to any one of claims 1 to 3, **characterized in that** one of the mutually adjacent ends (3, 5; 4, 6) is provided with a projection (9) which projects in the circumferential direction (7) and, in the projecting region, is widened in its cross section and **in that** the adjacent other end (5, 3; 6, 4) has a congruently shaped clearance (10) which is set back in the circumferential direction (7), has a cross-sectional constriction in the region of its opening and into which the projection (9) can be clipped.

5. A support according to claim 4, **characterized in that** the projection (9) is formed substantially in a dovetail-shaped manner.

6. A support according to either of claims 4 and 5, **characterized in that** the projection (9) of one end (3, 5; 4, 6) and the material of the other end (5, 3; 6, 4), adjacent to the clearance (10), have at least on one side of the support at least one merging notch (11).

## Revendications

1. Support d'un joint d'étanchéité plat, formé d'un matériau incassable et pouvant être entouré par un matériau d'étanchéité élastomère coulé par injection, comprenant au moins deux segments (1, 2) qui sont reliés l'un à l'autre dans la zone de leurs extrémités (3, 5 ; 4, 6) tournées l'une vers l'autre, **caractérisé en ce que** les extrémités (3, 5 ; 4, 6) sont fixées l'une à l'autre par conjugaison de forme.

2. Support selon la revendication 1, **caractérisé en ce que** les extrémités (3, 5 ; 4, 6) sont accrochées l'une dans l'autre dans la direction circonférentielle (7) d'une manière résistant à la traction.

3. Support selon l'une quelconque des revendications 1 à 2, **caractérisé en ce que** chaque extrémité (3, 4 ; 5, 6) est exécutée de manière symétrique par rapport à un plan (8) fictif vertical s'étendant dans la direction circonférentielle (7) sur le support.

4. Support selon l'une quelconque des revendications 1 à 3, **caractérisé en ce qu'**une des extrémités (3, 5 ; 4, 6) contiguës est pourvue d'une saillie (9) avançant dans la direction circonférentielle (7) et dont la section transversale est élargie dans la zone saillante, et que l'autre extrémité adjacente (5, 3 ; 6, 4) comprend un évidement (10) de forme congruente, en retrait, en direction circonférentielle dont la section transversale présente un rétrécissement dans la zone de son embouchure et dans lequel la saillie (9) peut s'enclencher.

5. Support selon la revendication 4, **caractérisé en ce que** la saillie (9) est exécutée de manière à avoir essentiellement une forme en queue d'aronde.

6. Support selon l'une quelconque des revendications 4 à 5, **caractérisé en ce que** la saillie (9) de l'une des extrémités (3, 5 ; 4, 6) et le matériau de l'autre extrémité (5, 3 ; 6, 4), contiguë à l'évidement (10), sont pourvus, au moins sur un côté du support, d'au moins une entaille (11), lesquelles entailles se fondent l'une dans l'autre.
